# Europäisches Patentamt
# European Patent Office
# Office européen des brevets

(19)

(11) Numéro de publication: **0 151 158**
**B1**

(12) # FASCICULE DE BREVET EUROPEEN

(45) Date de publication du fascicule du brevet:
**19.11.87**

(51) Int. Cl.⁴: **H 02 K  37/00,** H 02 K  21/24,
G 04 C  13/11, G 04 C  15/00

(21) Numéro de dépôt: **84902778.4**

(22) Date de dépôt: **30.07.84**

(86) Numéro de dépôt international:
**PCT/CH 84/00118**

(87) Numéro de publication internationale:
**WO 85/00704  (14.02.85 Gazette 85/4)**

(54) **MOTEUR POLYPHASE A ROTOR AIMANTE PRESENTANT N PAIRES DE POLES A AIMANTATION AXIALE.**

(30) Priorité: **28.07.83  CH 4129/83**

(43) Date de publication de la demande:
**14.08.85 Bulletin 85/33**

(45) Mention de la délivrance du brevet:
**19.11.87 Bulletin 87/47**

(84) Etats contractants désignés:
**CH DE FR GB LI NL**

(73) Titulaire: **GROSJEAN, Michel, 1, rue des Narcisses,
CH-2504 Bienne (CH)**

(72) Inventeur: **GROSJEAN, Michel, 1, rue des Narcisses,
CH-2504 Bienne (CH)**

(74) Mandataire: **Micheli, Michel-Pierre et al, MICHELI &
CIE 118, Rue du Rhône Case Postale 47,
CH-1211 Genève 6 (CH)**

(56) Documents cités:
FR - A - 1 238 445
FR - A - 2 417 880
FR - A - 2 458 170
FR - A - 2 518 844

## Description

Cette invention se rapporte aux moteurs polyphasés, dont le rotor présente N paires de pôles à aimantation axiale.

Il existe différents types de moteurs à rotor aimanté. Celui selon la présente invention est du type dont les axes de magnétisation du rotor sont des droites parallèles à l'axe de rotation de ce dernier.

L'invention vise principalement à créer un moteur polyphasé de rendement élevé, en utilisant des matériaux existants, qui soit fabricable facilement, par des procédés industriels et dont le nombre de phases ainsi que la gamme des puissances puissent être étendus, sans modification de la conception du moteur. Subsidiairement, elle vise aussi à créer un moteur polyphasé qui puisse être adapté facilement au mode pas à pas.

Le domaine d'application du moteur selon la présente invention est donc très vaste. Ce moteur peut être utilisé, en particulier, dans les systèmes d'entraînement pour la bureautique, la robotique, l'industrie aéronautique et spatiale, l'appareillage photographique, les garde-temps. Plus généralement, le moteur selon la présente invention convient à tous les systèmes utilisant la technique digitale, et, plus particulièrement, à tous ceux où les critères d'encombrement, de rendement, de puissance et de vitesse sont déterminants.

On connaît du brevet FR-A-2 518 844 des moteurs pas-à-pas biphasés comprennant un rotor et un stator en deux parties dont les axes de magnétisation du rotor, monté en face du stator, sont répartis régulièrement autour de son axe de rotation, les pôles adjacents étant de noms contraire. Dans ce moteur chaque phase comprend deux pièces polaires coplanaires et les phases correspondant aux pôles statoriques sont décalées les unes par rapport aux autres d'un demi-pas polaire et une bobine est enroulée autour de chaque noyau reliant les parties du stator et du rotor.

D'autre part on connaît du brevet FR-A-2 458 170 des moteurs synchrones à aimant permanent présentant des demi-pôles ayant pour but de rendre la distribution spatiale du champ plus uniforme.

L'inconvénient majeur des moteurs connus réside dans le fait qu'ils utilisent mal le champ magnétique du fait de la répartition spatiale des pièces polaires qui entraîne un espace angulaire perdu de l'ordre de 45° à 90°C.

La présente invention a pour objet la conception et la réalisation d'un moteur polyphasé à rotor aimanté dans lequel les espaces angulaires perdus sont réduits au minimum, voire supprimés, et permette ainsi une utilisation maximum du champ magnétique.

L'invention a pour objet un moteur polyphasé qui est caractérisé par la structure définie par la revendication 1, dont certaines formes spéciales d'exécution sont définies par les revendications 2 à 4, qui peut être adapté au mode pas à pas, en utilisant les moyens définis par la revendication 5.

Une forme d'exécution du moteur selon l'invention et deux variantes sont représentées schématiquement et à simple titre d'exemple au dessin, dans lequel:

la fig. 1 est une vue de cette forme d'exécution dans la direction de l'axe de rotation du rotor;

la fig. 2 est une vue en plan de son stator;

la fig. 3 une vue en plan de son rotor;

la fig. 4 une vue en perspective de ce rotor;

la fig. 5 est une vue semblable à celle de la fig. 4, mais relative à la première variante;

la fig. 6 est une vue en plan d'une pièce de la seconde variante;

les figures 7 et 8 sont des déroulements linéaires du moteur, qui illustrent son mode de fonctionnement.

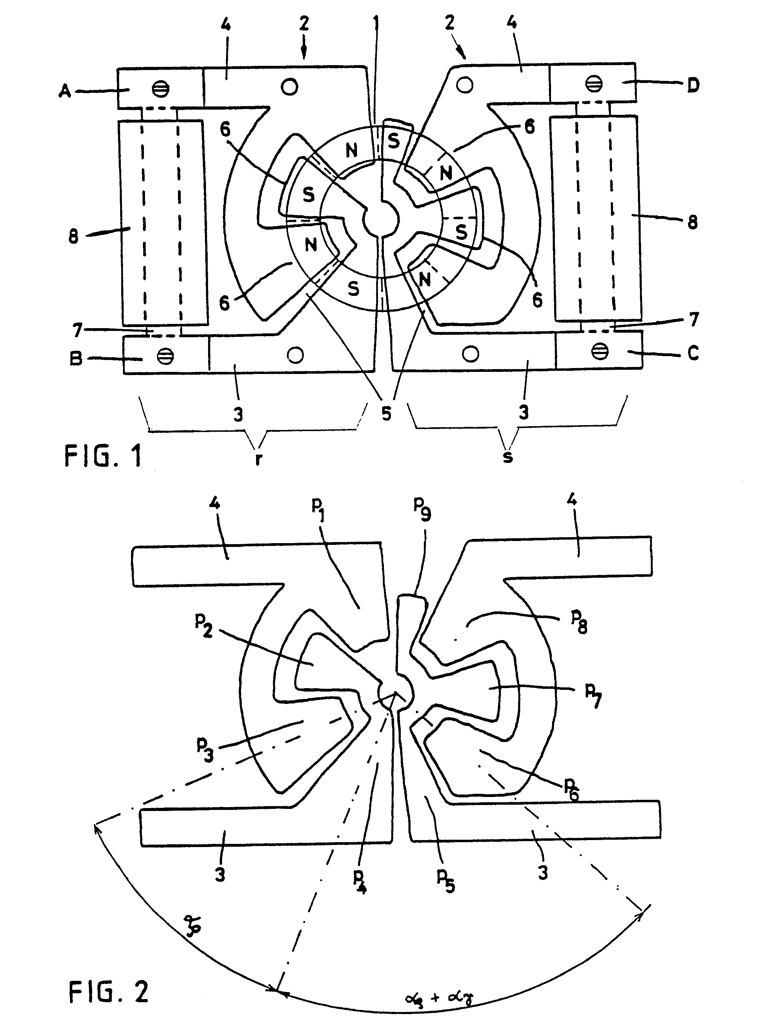

Le moteur représenté aux figures 1 à 4 possède un rotor 1 représentant un nombre N de paires de pôles égal à huit. Le nombre m des phases de ce moteur est égal à deux. En outre, le décalage entre ces deux phases est égal à $\dfrac{2\pi}{N \cdot m}$.

Le rotor 1 est en matériau ferromagnétique tel que le samarium-cobalt dont le champ coercitif est élevé et la masse volumique faible. Il présente huit paires de pôles dont les axes de magnétisation sont parallèles à l'axe de rotation du rotor, mais alternativement de sens opposés, et sont répartis régulièrement autour de cet axe.

Le rotor 1 est monté face à un stator 2, qui forme deux phases r et s. Chaque phase r, s est composée de deux pièces polaires 3, 4, coplanaires, imbriquées l'une dans l'autre, la pièce 3 étant à l'intérieur de la pièce 4. Les deux pièces polaires 3, 4 sont séparées l'une de l'autre par un entrefer sinueux 5 dans chaque phase.

Les pièces polaires 3, 4 sont en matériau ferromagnétique à faible champ coercitif et à induction de saturation élevée. Elles présentent des pôles 6 (Fig. 1) qui, pour faciliter les explications, sont désignés par $p_1$, $p_2$, . . . $p_9$ dans la fig. 2.

Cette figure montre que les pôles $p_1$, $p_3$ de la pièce polaire 4 de la phase r, les pôles $p_2$, $p_4$ de la pièce polaire 3 de cette même phase r, les pôles $p_6$, $p_8$ de la pièce polaire 4 de la phase s et le pôle $p_7$ de la pièce polaire 3 de cette phase s ont chacun la même extension angulaire. Ces différents pôles sont dits entiers, tandis que les pôles $p_5$ et $p_9$ de la pièce polaire 3 de la phase s sont fractionnaires. La somme des extensions angulaires de ces deux pôles fractionnaires est au moins approximativement égale à l'extension angulaire d'une pôle entier.

Dans le cas général d'un moteur à m phases et dont le rotor a N paires de pôles des pièces polaires de m-1 phases et ceux d'une pièce polaire de la m-ième phase sont entiers; ils sont au nombre de $\dfrac{1}{2}\dfrac{N}{m}$ par pièce polaire et sont espacés d'un intervalle angulaire au moins approximativement égal au double de celui existant entre les paires de pôles adjacentes du rotor. Quant aux pôles de la pièce polaire restante, il y en a $\dfrac{1}{2}\dfrac{N}{m} - 1$ qui sont entiers, tandis que les m pôles restants sont fractionnaires, la somme de leurs extensions angulaires étant au moins approximativement égale à l'extension angulaire d'un pôle entier.

Dans la forme d'exécution représentée, les phases r, s sont décalées l'une par rapport à l'autre d'un

angle $\alpha_\gamma$ de 22,5°. Dans le cas général d'un moteur à m phases et dont le rotor a N paires de pôles, $\alpha_\gamma = \frac{2\pi}{N \cdot m}$. L'extension angulaire de chacun des pôles frationnaires est au moins approximativement égale à 1/m fois celle d'un pôle entier.

Le décalage $\alpha_\gamma$ peut être rendu différent de $\frac{2\pi}{N \cdot m}$. Dans ce cas, la somme des extensions angulaires des pôles fractionnaires reste au moins approximativement égale à l'extension angulaire d'un pôle entier, mais ces pôles fractionnaires n'ont plus tous la même extension angulaire.

Les deux pièces polaires de chaque phase du stator 2 sont reliées magnétiquement entre elles par un noyau 7 en matériau ferromagnétique à faible champ coercitif et à induction de saturation élevée. Une bobine 8 est enroulée autour du noyau de chaque phase.

Les pièces polaires 3, 4 de chaque phase peuvent être positionnées chacune par une goupille et un pied-vis (non représentés). Quant au montage du rotor 1 il est classique. Il peut être pivoté dans des paliers à faible frottement de contact. Son arbre (non représenté) peut porter un pignon en prise avec le premier mobile d'un train d'engrenage, afin de transmettre les rotations du rotor à ce dernier.

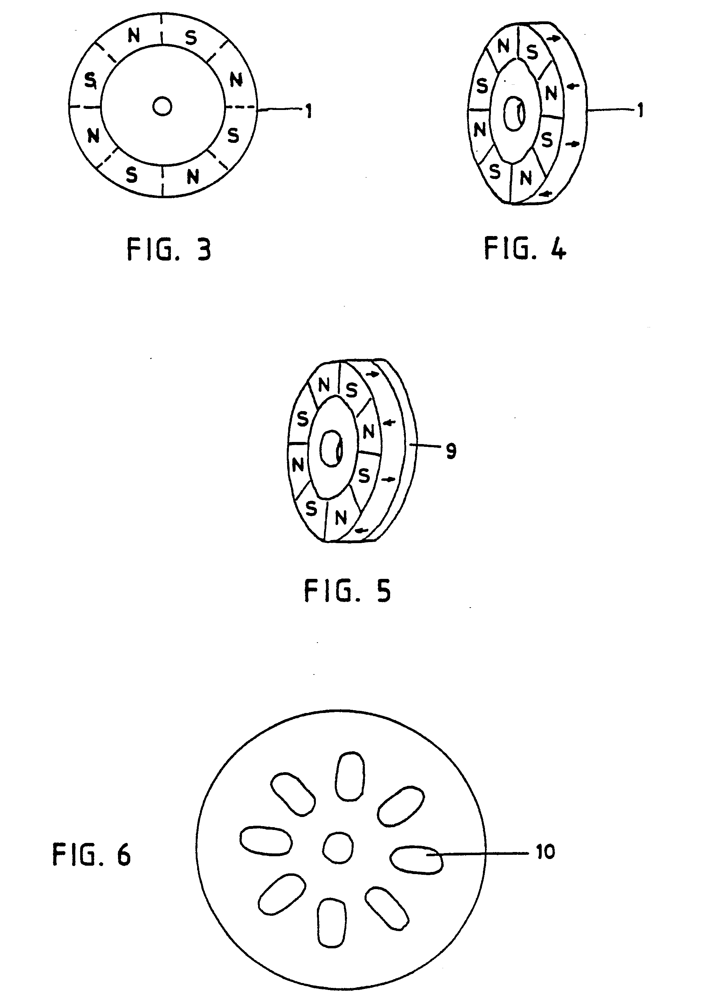

Dans la première variante (fig. 5), un disque 9 en matériau ferromagnétique doux est fixé à la face du rotor opposée à celle en regard du stator.

Dans la variante de la fig. 6, le moteur comprend un disque ferromagnétique doux fixe, qui est monté de façon que le rotor soit disposé entre lui et le stator. Ce disque présente des ouvertures 10, qui sont disposées judicieusement en vue de réaliser un couple de positionnement.

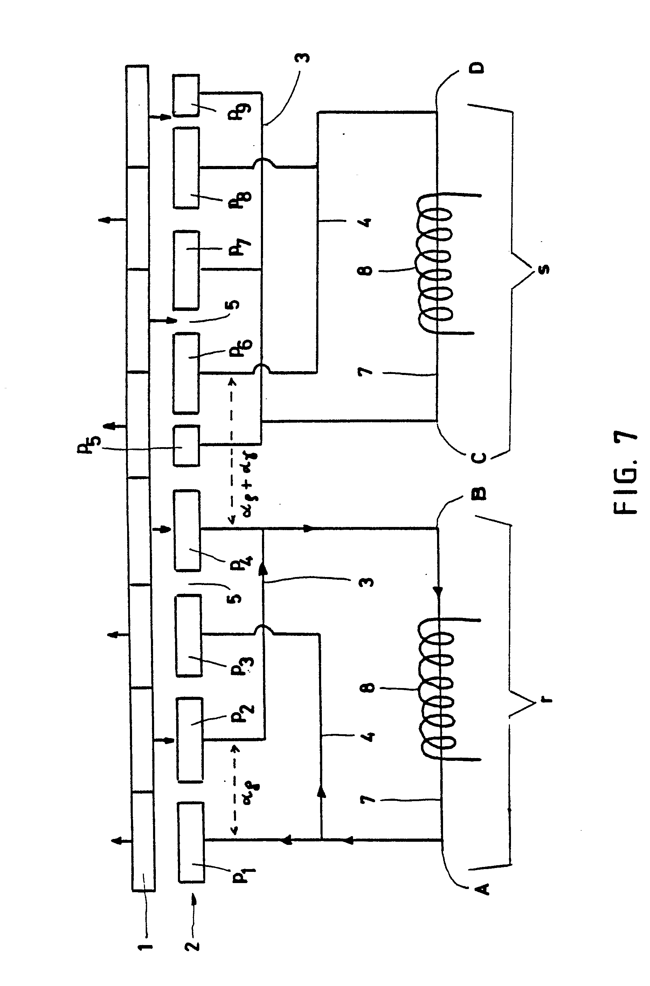

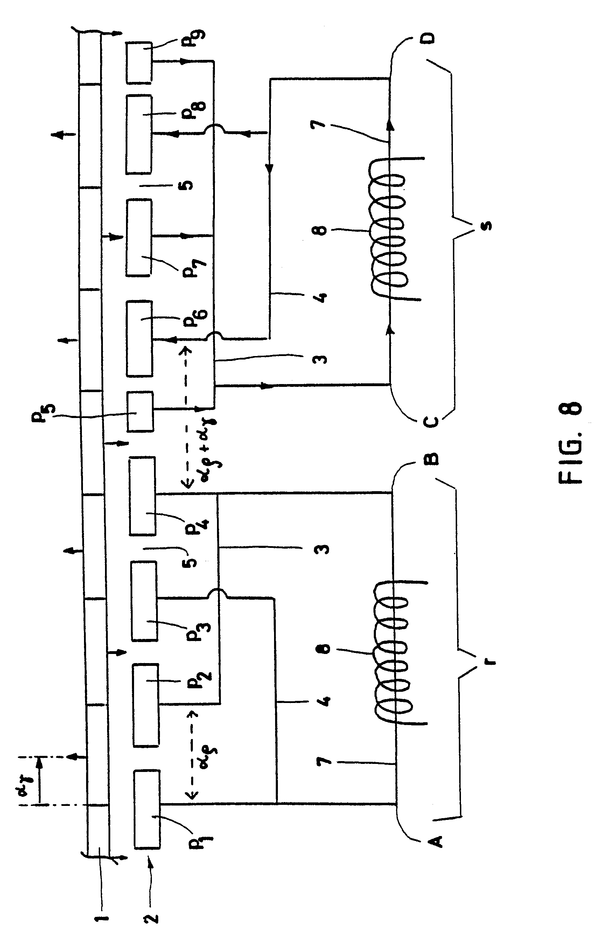

Les fig. 7 et 8 illustrent le fonctionnement du moteur. Ce sont des développements linéaires de celui-ci. Il s'agit plus particulièrement de coupes schématiques du moteur déroulé au préalable de façon linéaire. Le décalage des phases r, s est de 22,5°.

La fig. 8 représente l'état du moteur lorsque le rotor s'est déplacé de 22,5° par rapport à celui représenté à la fig. 7, soit, dans le cas général, d'un angle $\alpha_\gamma = \frac{2\pi}{N \cdot m}$.

En vue de faciliter la compréhension du fonctionnement du moteur représenté, la manière de créer la caractéristique appelée couple mutuel est exposée en premier lieu. Ce couple mutuel est celui qui provient de l'interaction entre les flux du rotor aimanté et ceux des bobines.

Dans la position de la fig. 7, des pôles du rotor 1 se trouvent exactement en regard des pôles $p_1$, $p_2$, $p_3$ et $p_4$ de la phase r. Cette figure montre que les flux du rotor dirigés vers le stator sont recueillis par les pôles $p_2$ et $p_4$ de la pièce polaire 3 d'où ils sont acheminés vers le noyau 7 de la phase r, qu'ils parcourent de B en A. Ils se referment ensuite en passant par les pôles $p_1$ et $p_3$ de la pièce polaire 4 du stator. Quant aux flux du rotor dirigés en sens inverse, ils sont aussi recueillis par la pièce polaire 3 de la phase r et suivent par conséquent le même chemin que les premiers considérés. Ils parcourent donc le noyau 7 aussi de B en A avant de se refermer. Dans la position considérée du rotor, le flux du rotor à travers le noyau 6 de la phase r est donc maximum.

En décalant le rotor à partir de cette position d'un angle $\alpha_p$ égal à 2π/N, il est facile de voir que le flux à travers le noyau 7 de la phase r est aussi maximum, mais de sens opposé, c'est-à-dire qu'il parcourt ce noyau de A en B. Il y a donc inversion du flux du rotor dans le noyau 7 de la phase r, chaque fois que le rotor tourne d'un angle égal à 2π/N, soit de 45° dans l'exemple représenté.

L'orsque la bobine de la phase r est alimentée, il en résulte, selon les lois de l'électromécanique, un couple d'interaction entre la bobine et le rotor aimanté, le couple mutuel, dont la période est égale à 4π/N, et dont les positions d'équilibre correspondent aux positions du rotor dans lesquelles des pôles de ce dernier sont exactement en regard des pôles des pièces polaires de cette phase r.

En ce qui concerne les pôles $p_5$, $p_6$, $p_7$, $p_8$ et $p_9$ de la phase s, entre lesquels se trouvent des pôles du rotor dans la fig. 7, il est facile de voir que cette phase s présente également un couple mutuel de période 4π/N, mais décalé par rapport au couple mutuel de la phase r d'un angle $\alpha_\gamma = \frac{2\pi}{N \cdot m}$, soit de 22,5° dans l'exemple représenté.

La position du rotor dans laquelle son flux à travers le noyau 7 de la phase s est maximum est celle de la fig. 8. Les deux pôles fractionnaires $p_5$ et $p_9$ recueillent chacun un flux égal à 1/m fois le flux recueilli par un pôle entier, soit 1/2 fois celui d'un pôle entier dans l'exemple représenté.

Les remarques faites ci-dessus à propos d'un décalage entre les phases différent de $\frac{2\pi}{N \cdot m}$ s'appliquent ici aussi.

Le comportement du moteur avec les couples mutuels indiqués, lorsque les bobines sont alimentées, est connu et ne sera pas décrit.

Le moteur représenté, biphasé et avec un rotor à 8 paires de pôles n'est évidemment pas la seule forme d'exécution possible du moteur selon l'invention. il suffit que le nombre N de paires de pôles du rotor et celui m des phases satisfassent la relation: $m = \frac{N}{2 \cdot n}$ où n est un nombre entier. Le tableau suivant indique les configurations possibles du moteur selon l'invention.

| m | n | N |
|---|---|---|
| 2 | 1 | 4 |
| biphasé | 2 | 8 |
| | 3 | 12 |
| | 4 | 16 |
| | ... | ... |
| | ... | ... |

| m | n | N |
|---|---|---|
| 3 | 1 | 6 |
| triphasé | 2 | 12 |
| | 3 | 18 |
| | 4 | 24 |
| | . . . | . . . |
| | . . . | . . . |
| 4 | 1 | 8 |
| tétraphasé | 2 | 16 |
| | 3 | 24 |
| | 4 | 32 |
| | . . . | . . . |
| | . . . | . . . |
| . . . . . | . . . | . . . |
| | . . . | . . . |

Dans la première variante représentée à la fig. 5, la présence du disque ferromagnétique doux 9 sur le rotor a pour effet d'augmenter le flux de chaque paire de pôles du rotor en augmentant la perméance vue par celles-ci.

Le disque ferromagnétique doux, fixe, de la seconde variante représentée à la fig. 6 a un effet analogue. En outre, il contrebalance la force d'attraction entre le rotor et le stator. Les ouvertures 10 de ce disque ont pour effet de créer un couple de positionnement. Ces ouvertures sont en nombre égal à celui des paires de pôles du rotor et sont disposées selon une couronne circulaire concentrique au rotor, dans laquelle elles sont réparties de façon régulière. Dans ce cas, la période du couple de positionnement est égale à $2\pi/N$. Il serait toutefois aussi possible de créer un couple de positionnement de période $4\pi/N$ en supprimant une des ouvertures 10 toutes les deux.

A propos du rendement du moteur selon l'invention et sans entrer dans les détails de la théorie, l'homme du métier constatera qu'il est élevé.

Tout d'abord, les flux de toutes les paires de pôles du rotor sont acheminés dans le même sens à travers chaque noyau des bobines, cela grâce à l'imbrication décrite des pièces polaires 3, 4, à la liaison magnétique prévue entre les deux pièces polaires et à la disposition des pôles entiers et fractionnaires. Il n'existe en effet aucune paire de pôles du rotor, dont le flux soit perdu en ce sens qu'il ne se refermerait pas par les noyaux et ne participerait pas de façon additive au flux mutuel.

De plus, dans le cas où le moteur est appelé à fonctionner pas à pas, le fait que le rotor soit plein, en ce sens qu'il n'existe pas d'intervalle angulaire entre les axes de magnétisation du rotor qui ne soit égal à $2\pi/N$, optimise, du point de vue du rendement, la relation entre le flux total de pôles du rotor et l'inertie de ce dernier. Cela provient du fait que le rendement est une fonction croissante du flux et décroissante de l'inertie, mais que la puissance à laquelle cette fonction croît avec le flux est plus grande que celle à laquelle elle décroit avec l'inertie.

Le nombre des phases du moteur selon l'invention peut être très étendu sans modifier la conception du moteur, puisqu'il suffit que la relation $m = \dfrac{N}{2 \cdot n}$ soit satisfaite pour n entier. Autrement dit, il suffit d'augmenter le nombre N de paires de pôles du rotor pour augmenter le nombre m de phases.

Le moteur selon l'invention a aussi l'avantage d'offrir une gamme de puissance très étendue, sans avoir à modifier la conception du moteur. Sans entrer dans les détails de la théorie, il est, en effet, intuitif de remarquer que la puissance mécanique d'un moteur de ce type est une fonction croissante du nombre de paires de pôles du rotor ainsi que du diamètre de ce dernier.

La fabrication du moteur selon l'invention est aisée, vu que son stator est entièrement défini dans un plan.

Le moteur selon l'invention a enfin l'avantage de se prêter au mode de fonctionnement pas à pas, puisque le disque de la fig. 6 permet d'introduire le couple de positionnement nécessaire à ce mode de fonctionnement.

**Revendications**

1. Moteur polyphasé à rotor (1) aimanté présentant N paires de pôles à aimantation axiale dont les axes de magnétisation sont répartis régulièrement autour de son axe de rotation, les pôles adjacents étant de noms contraires; ce rotor (1) étant monté en face d'un stator (2); chaque phase (r, s) comprend deux pièces polaires (3, 4) coplanaires; ces phases (r, s) étant décalées les unes par rapport aux autres; au moins une bobine (8) étant enroulée autour de chaque noyau (7), caractérisé par le fait que le stator est formé de m phases (r, s), où $m = \dfrac{N}{2 \cdot n}$, n étant un nombre entier; que l'une (3) des pièces polaires (3, 4) de chaque phase (r, s) est imbriquée dans l'autre (4) et en est séparée par un entrefer (5) sinueux; que, pour m-1 phases (r, s) ainsi que pour l'une (4) des pièces polaires (3, 4) de la phase restante, les pôles ($P_1$ à $P_4'$ $P_6'$ $P_8$) de chacune des pièces polaires, au nombre de $n = \dfrac{N}{2 \cdot m}$, sont entiers et espacés par un intervalle angulaire au moins approximativement double de celui entre les pôles adjacents de chaque face du rotor (1); que $\dfrac{1}{2}\dfrac{N}{m} - 1$ pôles ($p_7$) de l'autre pièce polaire (3) de la phase restante sont entiers, que les m pôles restants ($P_5'$ $P_9$) de cette dernière pièce polaire (3) sont fractionnaires, la somme de leurs extensions angulaires étant au moins approximativement égale à l'extension angulaire d'un pôle entier, et que les pièces polaires (3, 4) de chaque phase (r, s) sont reliées magnétiquement entre elles par un desdits noyaux (7).

2. Moteur selon la revendication 1, caractérisé par le fait que les phases (r, s) sont décalées les unes par rapport aux autres d'un angle au moins approximativement égal à $2\pi/Nm$, et par le fait que l'extension angulaire de chaque pôle fractionnaire est au moins approximativement égale à 1/m fois celle d'un pôle entier.

3. Moteur selon la revendication 1 ou 2, caractérisé par le fait qu'un disque ferromagnétique doux (9) est fixé à la face du rotor (1) qui est opposée à celle en regard du stator.

4. Moteur selon l'une des revendications 1 à 3, caractérisé par le fait qu'un disque ferromagnétique doux (9) fixe, est disposé de façon que le rotor (1) se trouve entre lui et le stator (2).

5. Moteur selon la revendication 4, caractérisé par le fait que le disque ferromagnétique doux (9), fixe, présente N ou N/2 ouvertures (10) réparties régulièrement le long d'une couronne circulaire concentrique au disque.

## Patentansprüche

1. Mehrphasenmotor mit einem magnetisierten, N Polpaare mit axialer Magnetisierung aufweisenden Läufer (1), dessen Magnetisierungsachsen gleichmässig um seine Drehachse verteilt sind und benachbarte Pole ungleichmässig sind, wobei dieser Läufer (1) einem Stator 2 gegenüber angeordnet ist und jede Phase (r, s) coplanare Polstücke (3, 4) aufweist und die Phasen (r, s) gegeneinander versetzt sind, und mindestens eine Spule (8) um jeden Kern (7) gewickelt ist, dadurch gekennzeichnet, dass der Stator m Phasen (r, s) aufweist mit $m = \dfrac{N}{2 \cdot n}$, wobei n eine ganze Zahl ist und dadurch, dass eines (3) der Polstücke (3, 4) jeder Phase (r, s) in das jeweils andere verzahnt ist und die beiden Polstücke durch einen sinusförmigen Luftspalt (5) voneinander getrennt sind, so dass für m-1 Phasen (r, s) sowie für eines (4) der Polstücke (3, 4) der verbleibenden Phasen die Pole ($P_1$ bis $P_4$, $P_6$, $P_8$) eines jeden Polstückes einer Anzahl $n = \dfrac{N}{2 \cdot m}$, ganzzahlig sind und durch ein Winkelintervall getrennt werden, das mindestens nährungsweise doppelt so gross ist wie das zwischen den benachbarten Polen einer jeden Läuferfläche (1), dadurch dass $\dfrac{1}{2} \times \dfrac{N}{M} - 1$ Pole ($p_7$) des anderen Polstücks (3) der verbleibenden Phase ganzzahlig sind, dass die m verbleibenden Pole ($P_5$, $P_9$) des letzten Polstücks (3) unganzzahlig sind und die Summe ihrer Winkelabmessungen mindestens ungefähr gleich der Winkelabmessung eines ganzen Pols ist und dadurch, dass die Polstücke (3,4) einer jeden Phase (r, s) magnetisch untereinander durch einen der Kerne (7) verbunden sind.

2. Motor nach Anspruch 1, dadurch gekennzeichnet, dass die Phasen (r, s) gegeneinander mit einem Winkel versetzt sind, der mindestens nährungsweise gleich 2 π/Nm beträgt und dadurch, dass die Winkelabmessung eines jeden Polbruchteils mindestens nährungsweise gleich dem 1/m-fachen eines ganzen Pols beträgt.

3. Motor nach Anspruch 1 oder 2, dadurch gekennzeichnet, dass eine Scheibe aus einem weichen Ferromagneten (9) an der Seite des Läufers (1) befestigt ist, die der Seite gegenüberliegt, die dem Stator gegenüberliegt.

4. Motor nach einem der Ansprüche 1 bis 3, dadurch gekennzeichnet, dass eine ortsfeste Scheibe aus einem weichen Ferromagneten (9) derart angeordnet ist, dass der Läufer (1) sich zwischen ihr und dem Stator befindet.

5. Motor nach Anspruch 4, dadurch gekennzeichnet, dass die ortsfeste weich-ferromagnetische Scheibe (9) N oder N/2 Öffnungen (10) aufweist, die gleichmässig entlang eines kreisförmigen Kranzes verteilt sind, der konzentrisch zur Scheibe angeordnet ist.

## Claims

1. Multiphase motor having a magnetized rotor (1) presenting N pairs of axially magnetized poles, the magnetization axes of which are uniformly distributed around its axis of rotation, the adjacent poles being of oposite names; this rotor (1) being mounted to face a stator (2); each phase (r, s) comprising two coplanar polar pieces (3, 4); these phases (r, s) being displaced the ones with respect to the others; at least one coil (8) wound around each core (7), characterized by the fact that the stator is formed of m phases (r, s), where $m = \dfrac{N}{2 \cdot n}$, n being an integer; that one (3) of the polar pieces (3, 4) at each phase (r, s) is imbricated in the other one (4) and separated therefrom by a sineous air gap (5); that, for (m-1) phases (r, s) as well as for one (4) of the polar pieces (3, 4) of the remaining phase, the poles ($P_1$ to $P_4'$, $P_6$, $P_8$) of each polar pieces, the number of which is $n = \dfrac{N}{2 \cdot m}$ are complete and separated by an angular intervall at least approximately twice the one existing between the adjacent poles of each face of the rotor (1); that $\dfrac{1}{2} \times \dfrac{N}{m} - 1$ poles ($P_7$) of the other polar piece (3) of the remaining phase are complete, that the remaining m poles ($P_5'$ $P_9$) of this latter polar piece (3) are splintered, the sum of their angular extensions being at least approximately equal to the angular extension of a complete pole, and that the polar pieces (3, 4) of each phase (r, s) are magnetically connected through one of said cores (7).

2. Motor according to claim 1, characterized by the fact that the phases (r, s) are displaced the ones with respect to the others of an angle at least approximately equal to 2 π/Nm, and by the fact that the angular extension of each splintered pole is at least approximatively equal to 1/m times the one of a complete pole.

3. Motor according to claim 1 or 2, characterized by the fact that a soft ferromagnetic disc (9) is fixed to the face of the rotor (1) which is opposite the one facing the stator.

4. Motor according to one of the claims 1 to 3, characterized by the fact that a fixed soft ferromagnetic disc (9), is located in such a manner that the rotor (1) is situated between it and the stator (2).

5. Motor according to claim 4, characterized by the fact that the fixed soft ferromagnetic disc (9) has N or N/2 apertures (10) uniformly distributed along a circular ring concentric with the disc.

FIG. 1

FIG. 2

FIG. 3

FIG. 4

FIG. 5

FIG. 6

FIG. 7

0 151 158

FIG. 8

0 151 158